(19) Europäisches Patentamt
European Patent Office
Office européen des brevets

(11) **EP 3 889 706 B1**

(12) **EUROPÄISCHE PATENTSCHRIFT**

(45) Veröffentlichungstag und Bekanntmachung des Hinweises auf die Patenterteilung:
**04.05.2022 Patentblatt 2022/18**

(21) Anmeldenummer: **20166854.8**

(22) Anmeldetag: **30.03.2020**

(51) Internationale Patentklassifikation (IPC):
**G05B 19/406** (2006.01) **B23Q 17/00** (2006.01)

(52) Gemeinsame Patentklassifikation (CPC):
**G05B 19/406; B23Q 17/003;** G05B 2219/37388; G05B 2219/49177; G05B 2219/50183

(54) **VERFAHREN ZUR PRÜFUNG DES SPANNZUSTANDS WÄHREND BESCHLEUNIGUNGSPHASE**

METHOD FOR TESTING THE CLAMPING STATE DURING ACCELERATION PHASE

PROCÉDÉ DE VÉRIFICATION DE L'ÉTAT DE SERRAGE PENDANT LA PHASE D'ACCÉLÉRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.10.2021 Patentblatt 2021/40**

(73) Patentinhaber: **Franz Kessler GmbH 88422 Bad Buchau (DE)**

(72) Erfinder:
• **van Sprang, Joachim 88213 Ravensburg (DE)**

• **Weing, Harald 88400 Biberach an der Riss (DE)**

(74) Vertreter: **Otten, Roth, Dobler & Partner mbB Patentanwälte Großtobeler Straße 39 88276 Berg / Ravensburg (DE)**

(56) Entgegenhaltungen:
**EP-A1- 2 312 270        EP-A1- 3 581 328 DE-A1-102006 016 919**

EP 3 889 706 B1

**Beschreibung**

Die Erfindung betrifft ein Verfahren zur Prüfung des Spannzustands eines in einer Werkzeugspannvorrichtung einer Rotoreinheit eingespannten Werkzeughalters bzw. eines eingespannten Werkzeugs nach dem Oberbegriff des Anspruchs 1.

Aus dem Stand der Technik ist zum Beispiel aus der EP 3 581 328 A1 ein Verfahren zur Prüfung eines Spannzustands bei einer Werkzeugmaschineneinheit bekannt, bei dem über einen an einer festen Position angeordneten Sensorkopf der Abstand zur Rotoreinheit gemessen wird. Dabei wird z.B. vor der Bearbeitung des Werkstücks während einer bestimmten Zeitspanne eine zeitliche Abfolge von Messwerten aufgenommen und ausgewertet, um daraus einen Planlauffehler feststellen zu können. Ferner sind weitere Vorrichtungen zur Überprüfung der Genauigkeit von Arbeitsspindeln in Werkzeugmaschinen bekannt, etwa aus der EP 2 312 270 A1 mit einem Längenmesssystem, das einen eine Markierung tragenden Glasstab und eine Ablesevorrichtung aufweist, oder eine Vorrichtung zur Erkennung von Fremdkörpern im Spalt zwischen Werkzeug und Spindel, wie sie in der DE 10 2006 016 919 A1 vorgestellt ist.

Aufgabe der Erfindung ist es, ein Verfahren zur Prüfung des Spannzustands vorschlagen zu können, welches sich einfacher in den Bearbeitungsprozess integrieren lässt.

Die Aufgabe wird, ausgehend von einem Verfahren der eingangs genannten Art, durch die kennzeichnenden Merkmale des Anspruchs 1 gelöst.

Durch die in den abhängigen Ansprüchen genannten Maßnahmen sind vorteilhafte Ausführungen und Weiterbildungen der Erfindung möglich. Das erfindungsgemäße Verfahren zur Prüfung des Spannzustands zeichnet sich dadurch aus, dass bei der eigentlichen Messung im Grunde kein Zeitverlust mehr entsteht und eine Messung uneingeschränkt zum Beispiel auch nach jedem Werkzeugwechsel oder Werkzeughalterwechsel durchgeführt werden kann. Auf diese Art und Weise lässt es sich auch einfacher in den Bearbeitungsprozess integrieren, zumal es nicht notwendig ist, eigens eine Zeitspanne vorzusehen, in der lediglich das Prüfverfahren durchgeführt werden kann bzw. muss.

Zunächst wird erfindungsgemäß auf eine motorisch angetriebene Werkzeugmaschineneinheit abgestellt, die eine Statoreinheit und eine Rotoreinheit umfasst, wobei die Rotoreinheit um eine Drehachse drehbar gelagert ist. Die sich gegenüber der Statoreinheit drehende Rotoreinheit gehört in der Regel zu einem Motorspindel-Antrieb. Das eigentliche spanende Werkzeug (Fräser, Bohrer usw.) wiederum wird in einem Werkzeughalter, der/die wiederum in einer Werkzeugspannvorrichtung angeordnet ist, gehalten bzw. verspannt, welche als Teil des Spindelkopfes der Rotoreinheit anzusehen ist. Die Werkzeugspannvorrichtung besitzt zu diesem Zweck eine Halterung für einen Werkzeughalter. Die Werkzeugspannvorrichtung wird mit einer Spannkraft beaufschlagt und in Längsrichtung der Drehachse verstellt. Ein Teil der Spannvorrichtung kann dabei etwa in eine sich verjüngende Aufnahme gezogen werden, sodass der Werkzeughalter bzw. das Werkzeug wiederum u.a. mit einer radial wirkenden Kraft geklemmt werden kann. Durch Lösen der Spannkraft wird das verspannte Werkzeug wieder gelöst werden und kann der Werkzeugmaschine entnommen bzw. gewechselt werden.

Ferner ist eine Prüfungsvorrichtung zum Prüfen des Spannzustandes des Werkzeugs bzw. Werkzeughalters vorgesehen, welche einen oder mehrere Sensorköpfe zur sensorischen Erfassung aufweist. In der Regel ist die Verwendung eines einzelnen Sensorkopfes ausreichend. Der eigentliche Sensor ist im Sensorkopf untergebracht; der Sensor misst seinen Abstand zur Rotoreinheit, wobei der Sensor selbst in der Statoreinheit entsprechend angeordnet ist. Die Sensordaten werden mit einer Elektronikeinheit bzw. einer Auswerteelektronik verarbeitet bzw. ausgewertet, welche rechnergesteuert sein kann.

Der wenigstens eine Sensorkopf ist grundsätzlich an der Statoreinheit an einer festen Position im Bereich der Werkzeugspannvorrichtung angeordnet und kann sowohl stirnseitig am rotierenden Spindelkopf als auch seitlich messen. Verformungen, die beim Einspannen des Werkzeugs oder des Werkzeughalters aufgrund von eingeklemmten Spänen, einem schräg sitzenden Werkzeug, Werkzeughalter oder dergleichen herrühren, treten vornehmlich im Bereich der Werkzeugschnittstelle bzw. am Werkzeughalter auf.

Grundsätzlich können Sensorköpfe aber auch positionsvariabel angeordnet sein. In der Regel führt beispielsweise ein in der Werkzeugspannvorrichtung eingeklemmter Span, der zwischen das Werkzeug und die Werkzeugspannvorrichtung oder die Spannbacken geraten ist, dazu, dass das Werkzeug nicht mehr gerade in der Werkzeugspannvorrichtung sitzt bzw. dass die Werkzeugspannvorrichtung leicht (auch elastisch) verformt wird und ein unveränderter Rundlauf, ein unveränderter Planlauf des Werkzeugs / Werkzeughalters oder ein Laufen ohne Winkeländerung nicht mehr gewährleistet werden kann. Eine Störung des Rundlaufs stellt in der Regel eine besondere Beeinträchtigung der Bearbeitung dar. Derartige Verformungen treten im Allgemeinen sowohl seitlich als auch stirnseitig auf und sind dort auch grundsätzlich detektierbar. Stirnseitig wird ein Abstand parallel zur Drehachse gemessen, seitlich ein Abstand, der radial zur Drehachse verläuft. Alle derartigen Verformungen bis hin zu Verschiebungen der Rotoreinheit können auf diese Art und Weise festgestellt werden.

Eine Messung kann grundsätzlich in einem 90°-Winkel zur Oberfläche und/oder zur Drehachse der Rotoreinheit erfolgen, aber auch in einem davon abweichenden Winkel.

Gerade bei Werkzeugmaschinen werden hohe Anforderungen an die Bearbeitungsgenauigkeit gestellt. Das Werkzeug muss bei der Bearbeitung in genau definierter Weise im Werkzeughalter bzw. in der Werkzeugspannvorrichtung eingesetzt sein und bewegt werden, damit das zu bearbeitende Werkstück innerhalb der vorgegebenen Toleranzgrenze bearbeitet wird. Auch dann, wenn die Werkzeugmaschine und insbesondere die Werkzeugspannvorrichtung mit der notwendigen Präzision gefertigt sind, kommen beim Einsatz der Maschine zusätzliche Faktoren hinzu, welche es verhindern können, dass ein definierter Rundlauf / Planlauf weiterhin gegeben ist oder keine Winkelfehler auftreten. Im Betrieb der Maschine können die bei der Bearbeitung auftretenden Späne in der Werkzeugspannvorrichtung, am Werkzeughalter oder am Werkzeug haften bleiben und dafür sorgen, dass bei einem Werkzeugwechsel das neue Werkzeug nicht in der eigentlichen Soll-Position eingespannt werden kann. Analoges gilt bei einem Werkzeughalterwechsel. Beim Einspannen treten stattdessen Druckkräfte an lokalen Stellen auf, an denen z.B. ein Span zwischen Werkzeug und Werkzeughalter oder zwischen Werkzeughalter und Werkzeugspannvorrichtung sitzt. Denkbar ist auch, dass der Werkzeughalter in die Werkzeugspannvorrichtung so eingezogen wird, dass sich seine Einzugsposition, also seine Position in Richtung der Drehachse gegenüber früheren Einbausituationen geändert hat.

Da die Späne mitunter sehr klein sind, sind diese Fehler oftmals schwer festzustellen und treten auch dann in zufälliger Art auf, wenn der Werkzeughalter oder sonstige Bereiche der Werkzeugmaschine in üblicher Weise nach einem Bearbeitungsprozess gereinigt wurden. Dennoch können derartige Planlauffehler bzw. Winkelfehlstellungen des Werkzeugs dazu führen, dass das Werkstück nach der Bearbeitung außerhalb der Toleranzgrenzen liegt.

Der Sensorkopf misst eine zeitliche bzw. positionsbezogene Abfolge von Abstandswerten. Nimmt der Sensorkopf eine zeitliche Abfolge von Abstandswerten auf, so handelt es sich bei dieser in der Regel gleichzeitig um eine positionsbezogene Abfolge, weil die Rotoreinheit in einer zeitlichen Folge gedreht wird, es sei denn, dass zwischen der Aufnahme einzelner Messwerte stets exakt eine volle Drehung oder mehrere ganzzahligen Drehungen durchlaufen wurden.

Im Allgemeinen können erfindungsgemäß nicht nur Veränderungen des Planlaufs bestimmt werden, sondern zum Beispiel auch der Winkelstellung und im Rundlauf.

Das erfindungsgemäße Verfahren zeichnet sich nun dadurch aus, dass wenigstens eine Markierung an der Rotoreinheit oder an einer anderen Stelle auf der Rotorwelle vorgegeben wird. Hierdurch wird ermöglicht, dass auch bei unbekannter Drehzahl bzw. Winkelgeschwindigkeit eine Referenzmarkierung verwendet werden kann und eindeutig detektierbar wird, wann exakt eine Umdrehung der Rotoreinheit durchlaufen ist. Dies ist insbesondere dann von Vorteil, wenn unabhängig von anderen Sensoren ein Planlauf-oder Winkelfehler bestimmt werden soll, ohne dass in die Auswertung ein gesonderter Drehgeber mit einbezogen wird. Diese Markierung kann vorzugsweise vom Sensorkopf bzw. den Sensorköpfen bei dem eigentlichen Messvorgang gleichzeitig miterfasst werden. Es wird also kein weiterer Sensor grundsätzlich hierfür benötigt. Denkbar ist aber auch, dass ein zusätzlicher Sensor zur separaten Erkennung der Markierung bereitgestellt wird, insbesondere wenn die Abstandsmessung von der Markierungserkennung unabhängig bleiben soll.

Es besteht auch die Option, bei einer Variante der Erfindung mehr als eine Markierung, insbesondere am Messring, anzubringen. Auf diese Weise können noch weitere Informationen durch die Messung gewonnen werden, die z.B. eine Erfassung der Drehrichtung, Signalausrichtung oder eine Synchronisierung ermöglichen. Um bei der Erfassung der Markierung zusätzliche Informationen zu erhalten, kann die Markierung z.B. auch eine besondere Form aufweisen, z.B. ein schiefwinkliges Trapez, sodass hieraus etwa die Drehrichtung erkennbar ist.

Da mittels der Markierung auch die aktuelle Geschwindigkeit der Rotoreinheit erfasst werden kann, wird durch sie auch die Genauigkeit der Fehlermessung gemäß des erfindungsgemäßen Verfahrens nicht unmaßgeblich beeinflusst. Während es bislang notwendig war, diese Messung bei konstanter Drehzahl durchzuführen, um die Messwerte entsprechend miteinander vergleichen und in Beziehung setzen zu können, stellt die Erfindung darauf ab, diese ansonsten benötigte Zeitspanne einzusparen und zum Beispiel eine aussagekräftige Messung während der Beschleunigungsphase der Rotoreinheit, insbesondere beim Anfahren der Rotoreinheit der Werkzeugmaschine durchführen zu können.

Beim Anfahren der Maschinen erfolgt eine Beschleunigung der Rotoreinheit gegenüber der Statoreinheit. Während dieser Zeitspanne wird nun das erfindungsgemäße Verfahren angewandt. Dabei wird eine erste bzw. zweite Abfolge von Abstandswerten in der Regel außerhalb des Markierungsbereichs aufgenommen. Da diese Messungen jedoch während einer Beschleunigungsphase der Rotation der Rotoreinheit erfolgen, können diese Abstandswerte zunächst nicht ohne Weiteres in Beziehung gesetzt werden, weil die zeitliche Abtastung in der Regel mit einer vorgegebenen Taktrate, also in gleichen Zeitabschnitten, erfolgt, die beschleunigte Rotoreinheit aber zwischen zwei aufeinanderfolgenden Takten sich unterschiedlich weit dreht und daher die Positionen, insbesondere bei wenigstens zwei Abfolgen von Messungen nicht mehr übereinstimmen..

Die Weg-Zeit-Beziehung bzw. Winkel-Zeit-Beziehung wird wie folgt beschrieben:

$$s(t) = 0{,}5at^2 + v_0 t,$$

wobei $s(t)$ die zeitabhängige, in der Zeitspanne $t$ zurückgelegte Wegstrecke bzw. den in der Zeitspanne $t$ überstrichenen Winkelbereich, $a$ die Beschleunigung, $v_0$ die aktuelle Geschwindigkeit zum betrachteten Zeitpunkt am Anfang der Zeitspanne t.

Es werden erfindungsgemäß Abfolgen von Messwerten aufgenommen. Dabei wird der Abstand des an der Statoreinheit befestigten Sensorkopfs zur Rotoreinheit bestimmt und gemessen, ob sich dieser Abstand beim Drehen der Rotoreinheit ändert. Um die Abfolgen jeweils miteinander vergleichen zu können bzw. die Daten auszuwerten (z.B. die Abfolgen subtrahieren zu können), müssen den Abstandswerten die jeweiligen Positionen zuordenbar sein. Gemessen wird aber in der Regel die Zeit während der Aufnahme der Abstandswerte.

Die Rotoreinheit wird zunächst beim Anfahren der Maschine beschleunigt. Diese Beschleunigung kann im Wesentlichen gleichmäßig erfolgen, d.h. a ist im Wesentlichen konstant. Es gibt aber, gerade beim Anfahren der Rotoreinheit, grundsätzlich auch nicht konstante Beschleunigungsphasen.

Zu Beginn des Anfahrprozesses ist in der Regel die Beschleunigung während eines bestimmten Zeitraums jedoch nicht konstant. Die Drehzahl in Abhängigkeit von der Zeit ist in diesem Bereich leicht linksgekrümmt, sog. S-Verschliff, d.h. die Rotoreinheit fährt etwas langsamer an, damit das Anfahren ruckfrei vonstatten geht. Man spricht auch von einer sog. Ruckbegrenzung. Daher ist es vorteilhaft, nicht vom Stillstand aus zu messen, sondern vielmehr in einem Bereich annähernd konstanter Beschleunigung.

Für jede Abfolge kann entsprechend ein Menge von Abfolgevektoren gebildet werden, welche:

- den gemessenen Abstandswert,

- die Zeitinformation zum Zeitpunkt der Messung des Abstandswertes und

- einen Geschwindigkeitswert enthalten, die sog. aktuelle Geschwindigkeit; wird die Rotoreinheit beschleunigt und erfolgt die Geschwindigkeitsmessung über eine gewisse Zeitspanne, so werden in der Regel die gleichen zugeordneten aktuellen Geschwindigkeitswerte auch in wenigstens zwei Abfolgevektoren übereinstimmen.

Eine Skalierung wird erfindungsgemäß mathematisch unter der Bedingung durchgeführt, dass bei zwei zeitlich kurz hintereinander folgenden Messungen die quadratische Komponente der Bewegungsgleichung, also den auf die Beschleunigung zurückzuführenden Winkelanteil ausdrückt, vernachlässigt werden kann.

Eine derartige Linearisierung ist möglich, wenn die Zeitspanne zwischen der Messung zweier Abstandswerte nur klein genug gewählt wird. Dementsprechend werden der ersten und der zweiten Abfolge die aktuelle Geschwindigkeit zugeordnet, auch wenn eine der Messungen später erfolgt ist und der tatsächliche Geschwindigkeitswert von dem zugeordneten, aktuellen Wert abweicht. Da der Term, in den die Zeit quadratisch einfließt und der die Beschleunigung beschreibt, wegfällt, ist somit eine lineare Skalierung mittels der Geschwindigkeit unter den gegebenen mathematischen Bedingungen möglich. Die Messung kann somit zum Beispiel auch während der Anlaufphase der Maschine durchgeführt werden. Die Zeitspanne, welche die Maschine zum Anlaufen benötigt, sei es eine kurze oder eine lange Zeitspanne, muss stets abgewartet werden, da in dieser Zeitspanne die genauen Vorgaben für den Bearbeitungsvorgang (etwa die Drehzahl des Werkzeugs) in der Regel noch nicht erreicht sind. Dennoch ist es besonders von Vorteil, wenn bereits beim Anfahren der Rotoreinheit festgestellt werden kann, ob zum Beispiel ein Planlauffehler bzw. Rundlauffehler oder ein Winkelfehler vorliegt, weil sodann auch gegebenenfalls der Vorgang unterbrochen und vor einer Bearbeitung eine Reinigung oder Neupositionierung des Werkzeugs durchgeführt werden kann. Bei einem Werkzeugwechsel z.B. ist in der Regel damit zu rechnen, dass eine Veränderung des Planlaufs, des Rundlaufs oder der Winkelstellung erfolgt. Wird diese Abweichung so groß, dass sie eine (gegebenenfalls vordefinierte) Schwelle überschreitet, liegt ein Fehler vor.

Durch das erfindungsgemäße Verfahren kann also auch die Produktionszeit gesteigert werden, was unmittelbar auch mit Kostenvorteilen verbunden ist. In besonders vorteilhafter Weise wird die Rotoreinheit während der gesamten Aufnahme von Messwerten gleichmäßig beschleunigt. Auch dies vereinfacht noch einmal die Auswertung, wobei die Näherung lediglich darin besteht, den Beschleunigungsanteil aus dem Weg bzw. Winkel-Zeit-Diagramm zu vernachlässigen. Dies ist möglich, weil die aufeinander folgend gemessenen Messwerte sehr kurz hintereinander aufgenommen werden und somit deren zeitlicher Abstand bzw. Winkelabstand nur gering ist, d. h. der Beschleunigungsterm, der quadratisch bei gleichmäßiger Beschleunigung von der Zeit abhängt wird entsprechend vernachlässigbar klein.

Bei einem Ausführungsbeispiel der Erfindung wird also die Skalierung unter Berücksichtigung der Beschleunigung vorgenommen, indem aktuelle Geschwindigkeiten zu verschiedenen Zeitpunkten und die Zeitspanne zwischen den Geschwindigkeitsmessungen bestimmt werden. Durch die Vernachlässigung des Beschleunigungsterms enthält das Weg-Zeit-Diagramm bzw. Winkel-Zeit-Diagramm einen linearen Term, der linear von der Zeit abhängt und in den als Konstante die Geschwindigkeit (Bahngeschwindigkeit oder Winkelgeschwindigkeit), nicht die Beschleunigung einfließt. Die aktuelle Geschwindigkeit kann je nach Ausführungsform der Erfindung in verschiedener Weise bestimmt werden. Es kann sich zum Beispiel anbieten, die aktuelle Geschwindigkeit anhand der Markierung zu bestimmen, indem die Zeit zwischen zwei aufeinanderfolgenden Detektionen der Markierung durch den Sensorkopf gemessen wird. Eine derartige Messung ist umso genauer, wenn die Markierung nur einen vergleichsweise schmalen Abschnitt in einem Winkelsegment ausmacht, idealerweise eine punktuelle Markierung darstellt. Darüber hinaus ist es denkbar, die Markierung so auszubilden, dass diese einen vorgegebenen Kreisbogenabschnitt einnimmt und die Zeit bestimmt wird, in der die Markierung, die sich über einen vorbekannten Winkelabschnitt erstreckt, den Sensorkopf passiert.

Ist zum Beispiel eine einzige Markierung vorgesehen, d. h. pro Umdrehung wird der Sensorkopf genau einmal von der Markierung passiert, so erfolgt eine aktuelle Geschwindigkeitsmessung, indem gewissermaßen mit einer Ungenauigkeit einer Geschwindigkeitsänderung binnen einer Umdrehung eine aktuelle Geschwindigkeit bestimmt wird. Unterschiede aufgrund der Beschleunigung innerhalb dieser Zeitspanne von einer Umdrehung werden sodann nicht berücksichtigt. Umgekehrt ist die Messung entsprechend genauer, wenn die Markierung nur einen Bruchteil des gesamten Umdrehungswinkels von 360° ausmacht und zum Beispiel bestimmt wird, wann der in Rotationsrichtung vordere Teil der Markierung in den Bereich des Sensorkopfs gelangt und der in Rotationsrichtung hintere Teil der Markierung anschließend den Sensorkopf passiert.

Zum Beispiel kann die Markierung einer Ausführungsvariante der Erfindung als Nut, etwa in einem eigens dafür an der Rotoreinheit angebrachten Messring, ausgebildet sein, sodass die Bereiche außerhalb der Nut und innerhalb der Nut unterschiedliche Abstandswerte aufweisen. Gemessen werden dann zum Beispiel die Flanken, die an den Rändern der Nut auftreten und sich die vom Sensorkopf gemessenen Abstandswerte entsprechend verändern, Die Nut kann grundsätzlich senkrecht bzw. radial zur Drehachse hin verlaufende oder abgeschrägte Flanken aufweisen.

Dementsprechend lässt sich der Verlauf bei der Messung der Abstandswerte durch den Sensorkopf verfolgen. Je nach aktueller Winkelgeschwindigkeit bzw. Bahngeschwindigkeit ist das Auftreten der Flanken in kürzeren oder längeren Zeitabständen zu beobachten. Insbesondere bei hoher Umdrehungszahl kann eine Näherung, die eine Linearisierung erlaubt, so vorgenommen werden, dass zum Beispiel die Messwerte der ersten bzw. zweiten zeitlichen und/oder positionsbezogenen Abfolge von Messwerten innerhalb einer Umdrehung der Rotoreinheit vorgenommen werden. In diesem Fall wird angenommen, dass die Geschwindigkeit innerhalb der Umdrehung konstant bleibt. Gerade bei hohen Umdrehungszahlen, wie sie bei Werkzeugmaschinen auftreten, ist diese Näherung durchaus mit geringeren Fehlern behaftet. Insbesondere am Ende der Anlaufphase sind höhere Winkelgeschwindigkeiten zu erwarten, sodass die Messung mit der vorgenommenen Abschätzung in diesem Bereich genauer ist als am Anfang der Anlaufphase.

Mit der Detektierung der Flanken an den Rändern einer Markierung, die einen gewissen Winkelabschnitt abdeckt, wird diese gewissermaßen in Teilmarkierungen unterteilt, sodass zum Beispiel mit dem Sensorkopf festgestellt werden kann, wann die Markierung in den Bereich des Sensorkopfs gelangt und den Bereich des Sensorkopfs wieder verlässt. So kann zum Beispiel gemessen werden, wann die Markierung jeweils in den Bereich des Sensorkopfs gelangt und die erste Flanke vom Sensorkopf erfasst wird. Dabei wird jeweils die Zeitspanne, die zwischen zwei Messereignissen liegt, bei denen die Markierung auftritt und jeweils den gleichen Abstandswert aufweist. Analog können Zeitpunkte verwendet werden, wenn die Markierung aus dem Bereich des Sensorkopfes wieder herausfährt. Auf diese Art und Weise kann eine Fehlerabschätzung vorgenommen werden, weil so für jeden Messpunkt, also für die beiden Punkte, bei denen der gleiche Abstandswert vorliegt, sich eine aktuelle Geschwindigkeit bestimmen lässt, gleichzeitig aber auch die Zeitspanne, die zwischen den beiden Punkten liegt, gemessen werden kann.

Die jeweiligen Geschwindigkeiten können, wie bereits oben dargestellt, bestimmt werden, also anhand einer über einen bestimmten Winkelbereich ausgedehnten Markierung oder anhand des Erscheinens der gleichen Markierung nach einer Umdrehung. Auf diese Weise wird abgeschätzt, wie sich die Geschwindigkeit mit der Zeit ändert, sodass hieraus ein Fehler abgeschätzt wird, der bei der Näherung auftritt, wenn bei zeitlich aufeinanderfolgenden Punkten davon ausgegangen wird, dass der Beschleunigungsterm vernachlässigbar ist.

Auf diese Weise kann in vorteilhafter Weise auch bestimmt werden, wie genau das Verfahren arbeitet und gegebenenfalls entsprechend angepasst werden. Bei einer vorteilhaften Anwendungsform der Erfindung können zeitliche bzw. positionsbezogene Abfolgen von Abstandswerten als Referenzmessung verwendet werden. Beispielsweise ist es denkbar, eine neue Werkzeugmaschine, einen neuen Werkzeughalter, ein neues Werkzeug, bei der / dem noch kein Span durch ein Bearbeitungsvorgang aufgenommen worden sein kann, entsprechend zu vermessen und eine erste Abfolge von Messwerten als Referenz aufzunehmen. Denkbar ist es auch, nach einem Reinigungsvorgang die Rotoreinheit mit gereinigtem Werkzeughalter laufen zu lassen, um eine entsprechende Referenzmessung herzustellen. Jegliche Abweichung von der Referenzmessung kann somit festgestellt werden, und es wird dann ausgewertet, ob die Abweichung so groß ist, dass ein Rundlauffehler, ein veränderter Planlauf oder ein Winkelfehler vorliegt. Auf diese Art und Weise kann die Präzision der Bearbeitung deutlich verbessert werden. Die Messung der Betriebssituation stellt die Vergleichsmessung dar, die in Bezug zur Referenzmessung gesetzt wird.

Bei einer Abfolge von Abstandswerten kann die Markierung insbesondere als Initialpunkt gesetzt werden, um insbesondere bei der Differenzbildung und/oder der Fourier-Transformation die Abstandswerte unterschiedliche Abfolge einander zuordnen zu können. Insofern ist eine Referenzmessung vorteilhaft, da durch die Messung selbst feststellbar ist, wann eine vollständige Umdrehung erfolgt ist. Dies ist insbesondere dann von Vorteil, wenn das Verfahren durchgeführt wird, ohne dass von anderen Sensoren bzw. von der Maschinensteuerungen Werte über die Momentangeschwindigkeit bzw. -drehzahl an die Auswerteelektronik geliefert werden, sondern einzig die Werte des Sensorkopfes bzw. der Sensorköpfe diese Bestimmung durchführen.

Grundsätzlich kann bei einer Umdrehung das Abstandsprofil an sich vollständig aufgenommen werden. Es liegen jedoch sehr hohe Umdrehungszahlen vor, und in der Regel kann in vorteilhafter Weise auch mit einer vergleichsweise hohen Abtastrate gemessen werden. Ist zum Beispiel infolge eines Spans oder infolge eines verkippt eingebauten / eingespannten Werkzeugs / Werkzeughalters ein Planlauffehler oder ein Winkelfehler vorhanden, bei dem zum Beispiel das Werkzeug gegenüber der Drehachse schräg steht, so wird eine periodisch auftretende Abweichung feststellbar sein. Um diese auswerten zu können, bietet es sich daher an, eine Fourier-Transformation des Signals vorzunehmen, die insbesondere zur Vereinfachung der Auswertung als diskrete Fourier-Transformation, vorzugsweise als FFT oder DFT durchgeführt wird. Hierzu können die Werte der ersten und der zweiten Abfolge voneinander subtrahiert werden, wobei dazu die Positionen der Abstandsmessungen übereinstimmen müssen. Eine derartige Differenzbildung kann aber auch nach der Fourier-Transformation der jeweiligen Abfolgen erfolgen. Im Idealfall wären alle Abstandswerte identisch, sodass im Vergleich mit der Referenzmessung kein veränderter Planlauf, keine Beeinträchtigung des Rundlaufs oder keine veränderte Winkelstellung vorliegt. Aufgrund von statischen und systematischen Fehlern, allein bei der Messung, ist aber nicht zu erwarten, dass der Sensorkopf auch ohne veränderten Planlauf, ohne veränderte Winkelstellung bzw. ohne Rundlauffehler stets exakt dieselben Abstandswerte misst.

Weisen die Abstandswerte Unregelmäßigkeiten auf, insbesondere Singularitäten, so können diese entsprechend festgestellt werden, da sie periodisch detektiert werden, und ihnen kann somit auch eine Frequenz zugeordnet werden, die durch die Fourier-Transformation zu bestimmen ist. Denkbar ist auch, dass ein Mittelwert der zeitlichen bzw. positionsbezogenen Abfolge mit anschließender Differenzbildung zwischen Mittelwerten vorgenommen wird.

Je nachdem, welche Art von Fehler (Planlauffehler mit lokaler Verformung oder Winkelfehler mit gleichmäßiger Änderung des Abstands) vorliegt, kann dies auch zu Erkennungsmustern führen die, sofern bekannt, darüber Aufschluss geben, um welche Art von Fehler es sich handelt, ob zum Beispiel ein Span verklemmt ist, wo dieser zu finden ist oder ob das Werkzeug bzw. der Werkzeughalter verkippt ist usw. Zu diesem Zweck können Methoden der künstlichen Intelligenz, insbesondere das maschinelle Lernen eingesetzt werden, um die Arten der entsprechenden Fehler, sei es einen Planlauf oder einen Winkelfehler, erkennen und auswerten zu können. Auch der Einsatz neuronaler Netzwerke ist insofern möglich. Diese Maßnahme ermöglicht in vorteilhafter Weise, dass nicht nur das Auftreten eines Fehlers erkannt wird, sondern auch näher bestimmt werden kann, worin der Fehler im eigentlichen besteht, sodass letzten Endes ein Beheben, beispielsweise durch gezieltes Säubern der Maschine ermöglicht wird. Die Stillstandzeiten der Maschine können dadurch wesentlich verringert werden. Bei einem eingeklemmten Span ist insbesondere damit zu rechnen, dass Teile des Werkzeughalters oder auch der Werkzeugspannvorrichtung an diskreten Stellen verformt sind. In der Auswertungsabfolge kann somit nach Veränderungen im Messsignal, d.h. nach veränderten zeitlichen bzw. positionsbezogenen Abstandswerten gesucht werden.

Zu berücksichtigen ist aber, dass jede Messung grundsätzlich auch mit Fehlern behaftet ist. Je genauer die Messungen sind und je höher die Abtastrate sind, mit der gemessen wird, desto stärker ist auch damit zu rechnen, dass auch bei einem hinreichenden Planlauf nicht über eine Umdrehung hinweg stets die gleichen Abstandswerte gemessen werden. Es ist daher vorteilhaft, Toleranzen abschätzen zu können. Insbesondere kann ein Schwellwert festgelegt werden, ab dem tatsächlich davon ausgegangen wird, dass ein Span eingeklemmt ist oder ein anderer Fehler zu einer Abweichung vom Planlauf oder vom Rundlauf beiträgt oder zu einem Winkelfehler führt, der tatsächlich auch korrigiert werden muss. Insofern können derartige Veränderungen bei den Messungen vorteilhafterweise in Bezug auf einen vorbestimmten Schwellwert verglichen werden.

Bei einem Ausführungsbeispiel der Erfindung können in der Auswertungsfolge, insbesondere in der Fourier-Transformierten bei einem der Umdrehungszahl pro Zeiteinheit der Rotoreinheit entsprechenden Frequenzwert Differenzwerte der Abstände mit einem Schwellwert verglichen werden. Im Fall des Überschreitens des Schwellwerts wird ein Planlauffehler / Rundlauffehler / Winkelfehler angenommen, weil zum Beispiel ein Span zu einer lokalen Verformung geführt hat, der in der Spannvorrichtung oder zwischen Werkzeughalter und Werkzeug geklemmt ist.

Ferner kann bei einer Ausführungsvariante der Erfindung aus der Differenz von zwei der zeitlichen bzw. positionsbezogenen Abfolgen eine Verlagerung der Rotoreinheit bzw. der Drehachse bestimmt werden. Diese Verlagerung kann sich zum Beispiel dahingehend auswirken, dass das Werkzeug früher oder später auf dem Werkstück aufsetzt als gedacht bzw. als von der Maschinensteuerungen vorgesehen ist. Hierdurch kann entsprechend die Bearbeitungsgenauigkeit beeinflusst werden, auch wenn das Werkzeug oder der Werkzeughalter nicht verkippt ist. Derartige Änderungen können auftreten, wenn das Werkzeug / der Werkzeughalter zum Beispiel auch ohne Winkelfehler eingezogen wird. Bei derartigen Abweichungen steht das Werkzeug aus dem Werkzeughalter bzw. der Werkzeughalter aus der Spannvorrichtung entweder weiter heraus oder sitzt jeweils tiefer darin.

Darüber hinaus kann das entsprechende Verfahren grundsätzlich auch im Stillstand eingesetzt werden, wenn entsprechende Verlagerungen zum Beispiel vor und nach dem Werkzeug-Wechsel bzw. Werkzeughalter-Wechsel miteinander verglichen werden.

Ausführungsbeispiele:

Ausführungsbeispiele der Erfindung sind in den Zeichnungen dargestellt und werden nachstehend unter Angabe weiterer Einzelheiten und Vorteile näher erläutert.

Im Einzelnen zeigen:

Fig. 1: eine schematische Darstellung einer Werkzeugmaschineneinheit gem. der Erfindung,

Fig. 2: eine schematische Darstellung eines Auszugs des Prüfungsverfahrens gem. der Erfindung zur Prüfung des Spannzustands,

Fig. 3: eine Darstellung eines Verformungsbildes als Auswertungsergebnis,

Fig. 4: ein Diagramm zur Abhängigkeit der Drehzahl gegenüber der Zeit zur Darstellung des Anlaufens der Rotoreinheit,

Fig. 5: eine am Messring angebrachte, radial ausgerichtete Nut,

Fig. 6: ein Abstand-Zeit-Diagramm bei der Detektion einer Nut, sowie

Fig. 7: eine Veranschaulichung einer Fehlerabschätzung anhand des Abstand-Zeit-Diagramms.

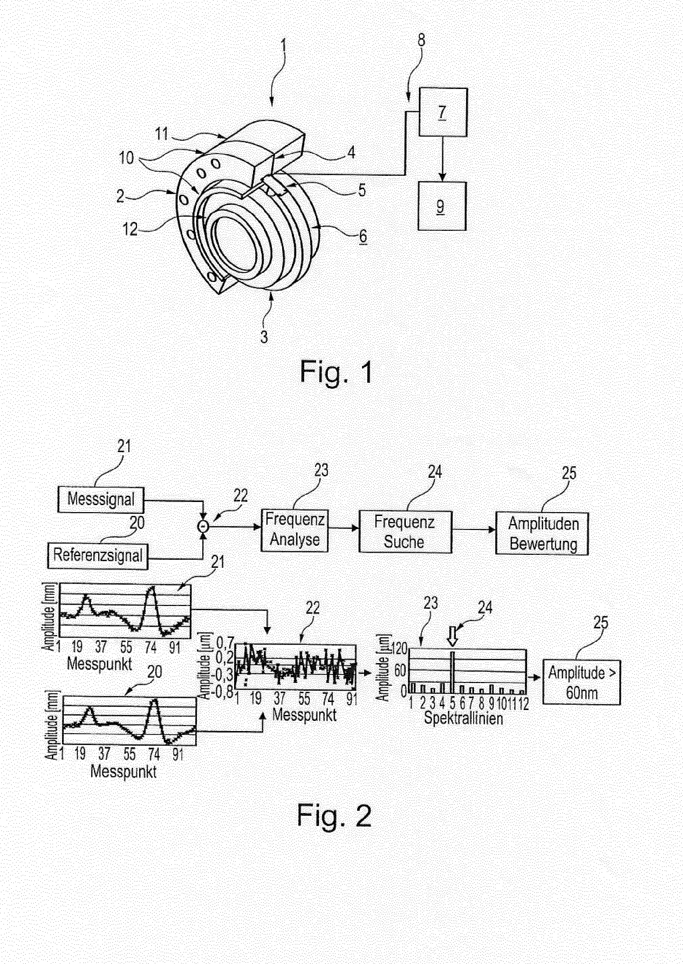

Figur 1 zeigt eine schematische Darstellung einer Werkzeugmaschineneinheit 1 mit einer Statoreinheit 2 und einer Rotoreinheit 3, wobei in Figur 1 vor allem der Spindelkopf als Teil der Rotoreinheit 3 zu sehen ist. Die Statoreinheit 2 weist einen Ring 4 auf, an dem ein Sensorkopf in Form eines Axialsensors 5 angebracht ist. Die Rotoreinheit 3 umfasst einen Messring 6 aus einem Metall, der hier vorteilhafterweise aus einem paramagnetischen Material gefertigt ist. Der Axialsensor 5 ist so angeordnet, dass er den Abstand zu einer stirnseitigen Fläche der Rotoreinheit 3 misst. Denkbar ist aber auch eine seitliche Messung, radial zur Drehachse. Diese Fläche, zu welcher der Abstand bestimmt wird, befindet sich auf dem Messring 6. Der Axialsensor 5 ist als Wirbelstromsensor ausgebildet, um trotz etwaiger Verschmutzungen möglichst genaue Messungen erhalten zu können.

Der Sensorkopf / Axialsensor 5 ist mit einer Elektronikeinheit 7 verbunden; beide zusammen bilden die Prüfungsvorrichtung 8, die wiederum mit der Maschinensteuerung 9 verbunden ist, sodass gegebenenfalls bei zu starken Planlauffehlern in die Steuerung eingegriffen werden kann.

Bei einer besonders bevorzugten Weiterbildung ist nur ein Sensorkopf 5 vorgesehen. Denkbar ist es, zusätzlich einen Triggersensor, z.B. zur Erkennung einer optischen Referenzmarkierung am Messring 6 einzusetzen, wobei ein solcher Triggersensor beispielsweise auch am Sensorring 4 angebracht werden kann. Die Markierung kann auch als Nut oder dergleichen ausgebildet sein. Mit einem derartigen Triggersensor wird nur der Initialpunkt für die Messungen getriggert, damit bei der Auswertung einfacher die Phasenbeziehungen der Messwerte zueinander festgesetzt werden können. Ein Triggersensor ist nicht zwingend notwendig und auch in Figur 1 nicht weiter dargestellt.

Die Statoreinheit 2 umfasst eine Abdeckung 10 für den Sensorring 4 und des Weiteren einen Lagerdeckel 11. An der Rotoreinheit 3 ist eine Werkzeugspannvorrichtung 12 angebracht (in Fig. 1 ist der Konusring dargestellt).

Mit den zur Verfügung stehenden Werkzeugen, die in den Werkzeughalter eingespannt werden, wird jeweils zunächst mit der neuen Werkzeugmaschineneinheit 1 eine Abfolge 20 von Referenzmesswerten aufgenommen. Dies kann werksseitig oder beim Kunden erfolgen. Eine Referenzmessung kann auch mit Werkzeug oder Werkzeughaltern erfolgen; dies ist aber nicht ohne Weiteres notwendig, erhöht aber unter Umständen die Präzision der Messung und erleichtert gegebenenfalls die Erkennung auch kleiner Späne im Bereich der Werkzeugschnittstelle, gerade dann, wenn individuelle Werkzeuge oder Werkzeughalter verwendet werden sollen. Im Betrieb wird dann später bei demselben Werkzeug / Werkzeughalter eine neue Abfolge 21 von Abstandswerten bestimmt. Es kann ein Satz von Referenzmessungen für unterschiedliche Werkzeuge oder Werkzeughalter durchgeführt werden; diese Maßnahme erhöht die Erkennungsgenauigkeit. Da die Abfolgen 20, 21 beim Anfahren der Maschineneinheit 1 und somit während der Beschleunigung der Rotoreinheit 3 aufgenommen werden, müssen die Positionsangaben der jeweiligen Abstandswerte skaliert werden, um miteinander verglichen werden zu können. In Figur 2 sind die Werte entsprechend bereits für die Abfolgen 20, 21 skaliert. In Figur 2 wird die Differenz 22 gebildet. Anschließend erfolgt eine Frequenzanalyse 23 des Signals in Form einer Fourier-Transformation. Es wird überprüft (Verfahrensschritt 24), ob bei einer bestimmten Frequenz eine Abweichung vorliegt, z.B. bei der Rotationsfrequenz der Rotoreinheit 3 bzw. bei welchen Frequenzen derartige Veränderungen in Erscheinung treten. Überschreiten diese einen Schwellwert, liegt eine Störgröße, z.B. eine Deformation infolge eines eingeklemmten Spans im Bereich der Schnittstelle vor (Amplitudenbewertung: Verfahrensschritt 25).

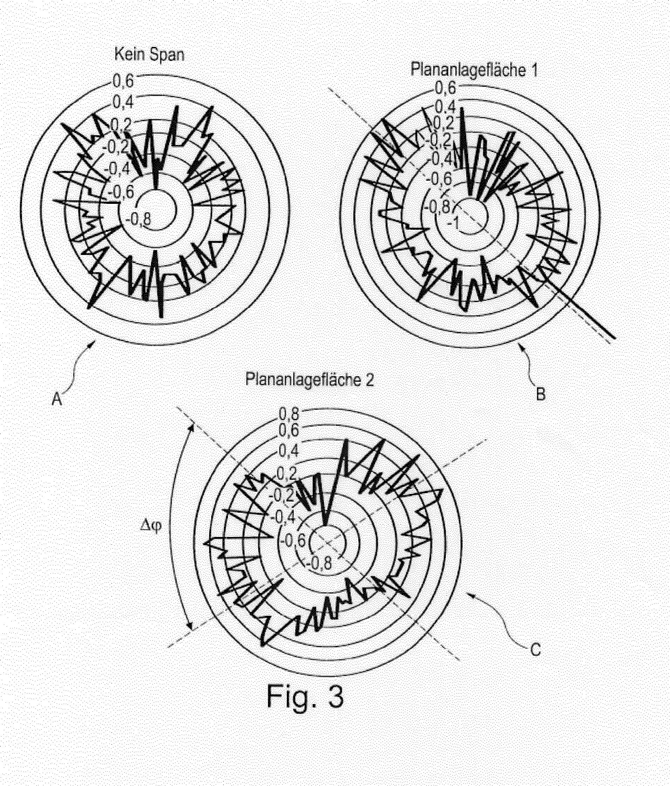

In Figur 3 sind typische Verformungsbilder dargestellt, wobei in der Darstellung A kein Span vorliegt und die Amplitudenverteilung wesentlich gleichmäßiger im gesamten Winkelbereich ist, während in der Darstellung B ein Span in der Werkzeugaufnahme eingeklemmt ist und für eine deutliche veränderte Verzerrung (zwischen 10-11 Uhr sowie 4-5 Uhr) mit höheren (veränderten) Amplituden bewirkt. Entsprechend kann auch der Schwellwert bestimmt werden. In der Darstellung C liegt der Span an einer anderen Winkelposition, sodass sich die Darstellung C gegenüber der Darstellung B hauptsächlich hinsichtlich der Phase um $\Delta\varphi$ unterscheidet.

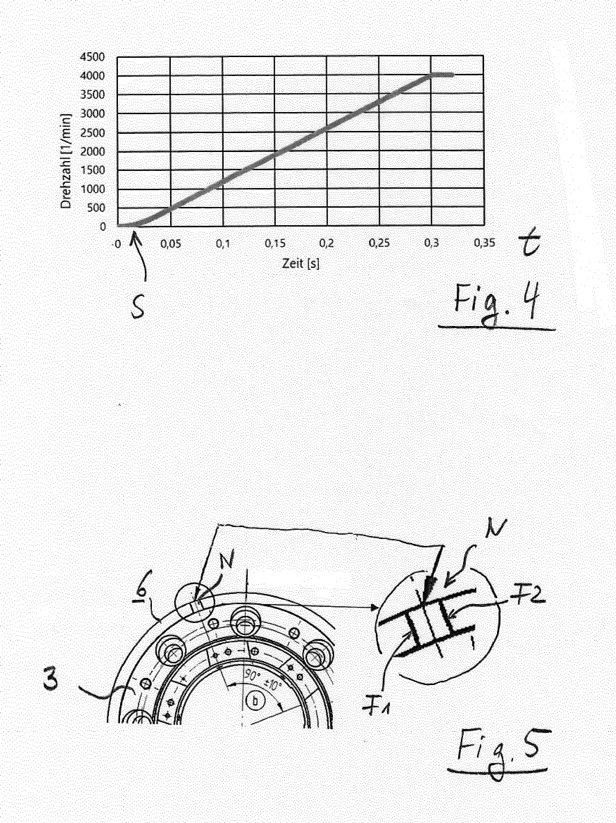

Im Serienbetrieb kann die Spannzustand-Prüfung in sehr kurzen Zeitabschnitten der Anlaufphase durchgeführt werden. In Figur 4 erfolgt beispielhaft in den ersten 300 ms eine Beschleunigung der Rotoreinheit, während der bereits eine Messwerterfassung durchgeführt wird. Dargestellt ist die Drehzahl der Rotoreinheit in Abhängigkeit vom zeitlichen Verlauf t. Der S-Verschliff S zeigt eine leicht linksgekrümmte Kurve, also ein langsames Anlaufen um ruckartige Bewegungen der zu vermeiden. Eine Linearisierung ist in diesem Bereich nicht sinnvoll, da die Beschleunigung nicht konstant ist und eine Näherung durch Vernachlässigung des Beschleunigungsanteils im Allgemeinen zu ungenau ist. Im Wesentlichen liegt aber sonst eine konstante Beschleunigung vor, also eine lineare Abhängigkeit der Drehzahl von der Zeit t. Kann keine Planlaufabweichung festgestellt werden, kann die Bearbeitung erfolgen. Andernfalls muss gemäß der Erfindung aus Sicherheitsgründen abgebremst werden. Ab ca. 300 ms ist für die beispielhafte Bearbeitung eine konstante Drehzahl von ca. 4000 Umdrehungen pro Minute erreicht.

In Figur 5 ist ein Schnitt durch eine Rotoreinheit 3 mit einem Messring mit Nut im Seitenbereich dargestellt. In der vergrößerten Darstellung sind die Randbereiche F1, F2 dargestellt, die als Flanken ausgebildet sein können und die bei entsprechend hoher Abtastrate erfasst werden können. Somit kann zum Beispiel eine aktuelle Geschwindigkeit auch daran bestimmt werden, wann der Sensorkopf die entsprechenden Flanken am Anfang und am Ende der Nut N erfasst. Da der Winkelbereich, über den sich die Nut N erstreckt, bekannt ist, ist auch der Winkelabstand zwischen diesen beiden Flanken bekannt, sodass lediglich die Zeitspanne zwischen dem Auftreten der Flanken zu bestimmen ist.

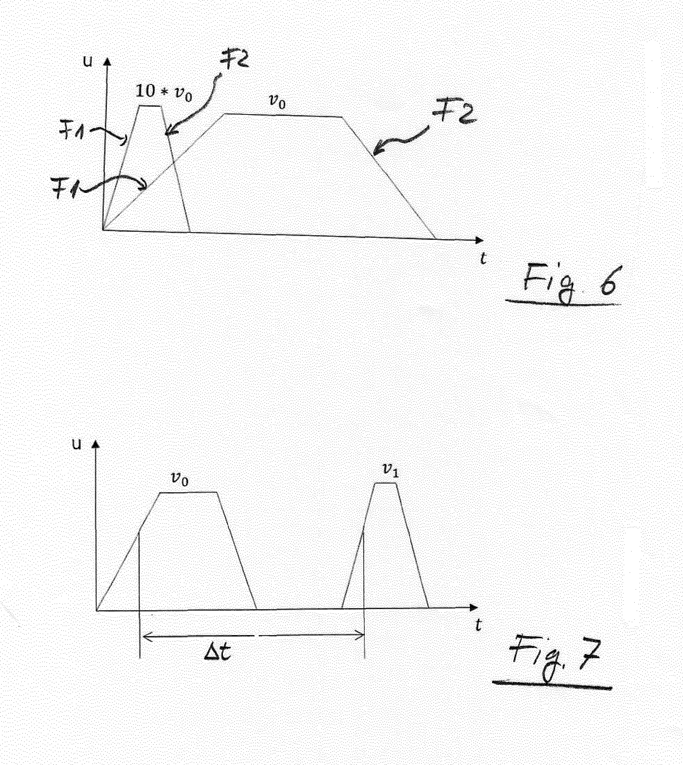

In Figur 6 sind zwei Darstellungen angegeben, bei denen der Verlauf des gemessenen Abstands u zwischen Sensorkopf und Rotoreinheit gezeigt ist, wenn die Nut N den Sensorkopf jeweils bei unterschiedlichen Geschwindigkeiten passiert, hier einmal bei 10-facher Geschwindigkeit. Im Bereich der Flanken F1, F2 ist die Abhängigkeit des Abstands u von der Zeit rampenförmig, da auch die Nut N im Bereich von F1, F2 einen rampenförmigen Verlauf zeigt. Der Verlauf ist bei höherer Geschwindigkeit $10v_0$ also zeitlich gestaucht.

In Figur 7 ist wiederum dargestellt, wie ein Fehler bei der der Linearisierung (Vernachlässigung des Beschleunigungsterms) bei kurzen Zeitabständen abgeschätzt werden kann.

Die gleiche Nut N wird unmittelbar zeitlich hintereinander bzgl. ihres Abstands u vermessen. Da eine gleichmäßige Beschleunigung stattfindet, ist die spätere Vermessung der Nut, die etwa bei der Geschwindigkeit $v1$ stattfindet, gegenüber der vorherigen gestaucht, d.h.

$v1 > v0$. Zwischen beiden Messereignissen liegt eine Umdrehung. In der Linearisierung wird angenommen, zwischen beiden Messereignissen läge die gleiche Geschwindigkeit vor. Die Zeitspanne zwischen beiden Messereignissen ist die Zeit, die zwischen zwei Punkten der gleichen Flanke F1 (oder F2 jeweils) vorliegt, bei denen der Abstand gleich ist. Der maximale Fehler kann somit abgeschätzt werden:

$$\Delta v/\Delta t = (v_1 - v_0)/\Delta t.$$

Bezugszeichenliste:

| 1 | Werkzeugmaschineneinheit |
|---|---|
| 2 | Statoreinheit |
| 3 | Rotoreinheit |
| 4 | Sensorring |
| 5 | Axialsensor |
| 6 | Messring |
| 7 | Elektronikeinheit |
| 8 | Prüfungsvorrichtung |
| 9 | Maschinensteuerung |
| 10 | Abdeckung |
| 11 | Lagerdeckel |
| 12 | Konusring / Werkzeugspannvorrichtung |
| 20 | Referenzsignal |
| 21 | Messsignal |
| 22 | Differenzoperator |
| 23 | Frequenz-Analyse |
| 24 | Frequenzsuche |
| 25 | Amplitudenbewertung |
| A | Verformungsbild (ohne Span) |
| B, C | Verformungsbilder (mit Span, an unterschiedlicher Position) |
| F1, F2 | Flanken an Nut-Rändern |
| N | Nut |
| u | Abstand |
| t | Zeit |
| $v_0$ | Geschwindigkeit |
| $\Delta\varphi$ | Phasenunterschied |
| a | Beschleunigung |

Patentansprüche

1. Verfahren zur Prüfung des Spannzustands eines in einer Werkzeugspannvorrichtung (12) einer Rotoreinheit (3) einer motorisch angetriebenen Werkzeugmaschineneinheit (1) eingespannten Werkzeughalters und/oder eines Werkzeugs, wobei der Werkzeughalter und/oder das Werkzeug lösbar fixiert und mittels einer mit Spannkraft beaufschlagbaren Werkzeug-Spannvorrichtung (12) verspannt wird, wobei die Werkzeug-Spannvorrichtung beim Verspannen des Werkzeugs in Längsrichtung der Drehachse verstellt wird, wobei die Werkzeugspannvorrichtung im Spindelkopf der Rotoreinheit (3) angeordnet ist, wobei die Werkzeugmaschineneinheit eine Statoreinheit (2) aufweist, gegenüber der die Rotoreinheit um eine Drehachse drehbar gelagert ist, wobei das Verfahren folgende Verfahrensschritte umfasst:

• Bereitstellen wenigstens eines Sensorkopfes (5) zur Bestimmung eines Abstandes (u),
• Anordnung des Sensorkopfes (5) an einer Position an der Statoreinheit (2),
• Messung des Abstands (u) des Sensorkopfes (5) von einem Teil der Rotoreinheit (3),
• Aufnahme wenigstens einer zeitlichen und/oder positionsbezogenen Abfolge (20, 21) der mit dem Sensorkopf (5) gemessenen Abstandswerte,
• Bestimmung einer Planlaufabweichung und/oder einer Rundlaufabweichung und/oder einer Winkeländerung ausschließlich unter Berücksichtigung der zeitlichen und/oder positionsbezogenen Abfolge der gemessenen Abstandswerte (u) zum Teil des relativ zum Sensorkopf rotierenden Spindelkopfes,

**dadurch gekennzeichnet, dass**

• eine Markierung (N) an der Rotoreinheit (3) bereitgestellt wird,
• wobei der Sensorkopf (5) die Markierung (N) an der Rotoreinheit beim Messen erfasst,
• wobei anhand der Erfassung der Markierung (N) durch den Sensorkopf die aktuelle Geschwindigkeit $(v_0, v_1)$ der Rotoreinheit (3) erfasst wird,
• wobei die Aufnahme einer ersten und einer zweiten zeitlichen und/oder positionsbezogenen Abfolge der mit dem Sensorkopf gemessenen Abstandswerte (u) während einer Beschleunigung der Rotation der Rotoreinheit (3) gegenüber der Statoreinheit (2), insbesondere beim Anfahren der Rotoreinheit, vorgenommen wird,
• wobei den Abstandswerten (u) der ersten und der zweiten Abfolge (20, 21) die jeweilige aktuelle Geschwindigkeit zugeordnet wird, um einen Abfolgevektor aus dem Abstandwert, der zeitlichen und/oder positionsbezogenen Information sowie der aktuellen Geschwindigkeit $(v_0)$ zu bilden,
• wobei die zeitliche und/oder positionsbezogene Information der Abfolgevektoren der ersten und/oder zweiten Abfolge mit Hilfe der jeweiligen zugeordneten aktuellen Geschwindigkeit $(v_0)$ skaliert wird, sodass insbesondere die Abfolgevektoren der jeweiligen Abfolgen jeweils wenigstens einen Abstandswert bei übereinstimmenden Positionen auf der Rotoreinheit (3) aufweisen
• Abbremsen der Rotoreinheit bei Erkennung einer Planlaufabweichung.

2. Verfahren zur Prüfung nach Anspruch 1, **dadurch gekennzeichnet, dass** die Aufnahme einer ersten und einer zweiten zeitlichen und/oder positionsbezogenen Abfolge (20, 21) der mit dem Sensorkopf (5) gemessenen Abstandswerte (u) während einer Beschleunigung der Rotation der Rotoreinheit (3) außerhalb der Markierung (N) erfolgt.

3. Verfahren zur Prüfung nach einem der vorgenannten Ansprüche, **dadurch gekennzeichnet, dass** die Rotoreinheit (3) während der gesamten Aufnahme gleichmäßig beschleunigt wird.

4. Verfahren zur Prüfung nach einem der vorgenannten Ansprüche, **dadurch gekennzeichnet, dass** die Skalierung unter Berücksichtigung der Beschleunigung (a) vorgenommen wird, indem die aktuellen Geschwindigkeiten $(v_0)$ zu verschiedenen Zeitpunkten bestimmt und die Zeit zwischen den Geschwindigkeitsmessungen bestimmt wird.

5. Verfahren zur Prüfung nach einem der vorgenannten Ansprüche, **dadurch gekennzeichnet, dass** die aktuelle Geschwindigkeit $(v_0)$ der Rotoreinheit (3) anhand der Markierung (N) bestimmt wird, indem:

• als Markierung (N) eine solche bereitgestellt wird, die einen bestimmten Winkelabschnitt der Rotoreinheit (3) bei der Rotation markiert, und die Zeit bestimmt wird, welche der Sensorkopf (5) benötigt, damit die Markierung (N) bei bekanntem Winkelabschnitt den Sensorkopf (5) passiert und/oder
• die Zeit zwischen zwei aufeinanderfolgenden Detektionen der Markierung (N) durch den Sensorkopf (5) gemessen wird.

6. Verfahren zur Prüfung nach einem der vorgenannten Ansprüche, **dadurch gekennzeichnet, dass** als Markierung (N) eine Nut verwendet wird, sodass der Bereich außerhalb der Nut und innerhalb der Nut unterschiedliche Abstandswerte (u) aufweisen.

7. Verfahren zur Prüfung nach einem der vorgenannten Ansprüche, **dadurch gekennzeichnet, dass** die Aufnahme der ersten und/oder zweiten zeitlichen und/oder positionsbezogenen Abfolge (20, 21) während einer Umdrehung der Rotoreinheit (3) vorgenommen wird.

8. Verfahren zur Prüfung nach einem der vorgenannten Ansprüche, **dadurch gekennzeichnet, dass** eine zeitliche und/oder positionsbezogene Abfolge (20, 21) von Abstandswerten (u), die als Referenzmessung verwendet wird, bei ideal eingespanntem Werkzeug und/oder Werkzeughalter, insbesondere vor dem ersten Bearbeitungsvorgang durch die Werkzeugmaschineneinheit (1) und/oder nach einem Reinigungsvorgang, vorzugsweise individuell für jedes verwendete Werkzeug und/oder für jeden verwendeten Werkzeughalter, aufgenommen wird.

9. Verfahren zur Prüfung nach einem der vorgenannten Ansprüche, **dadurch gekennzeichnet, dass** eine zeitliche und/oder positionsbezogene Abfolge (20, 21) von Abstandswerten (u) bei eingespanntem Werkzeug und/oder Werkzeughalter beim Anfahren der Rotoreinheit (3) zum Erreichen einer Betriebssituation, insbesondere in einer im Vergleich zur Referenzmessung späteren Betriebssituation, aufgenommen wird, die als Vergleichsmessung zur Referenzmessung verwendet wird.

10. Verfahren zur Prüfung nach einem der vorgenannten Ansprüche, **dadurch gekennzeichnet, dass** die Markierung (N) als Initialpunkt verwendet und den Abfolgen von Abstandswerten der Initialpunkt für die Auswertung zugeordnet wird, um insbesondere bei der Differenzbildung (22) und/oder der Fourier-Transformation (23) die Abstandwerte von unterschiedlichen Abfolgen (20, 21) einander zuordnen zu können.

11. Verfahren zur Prüfung nach einem der vorgenannten Ansprüche, **dadurch gekennzeichnet, dass** mittels wenigstens einer der folgenden Berechnungen eine Auswertungsabfolge von Werten bestimmt wird:

    • eine Differenzbildung (22) zwischen zwei der zeitlichen Abfolgen (20, 21) und anschließend eine Fourier-Transformation (23), insbesondere eine diskrete Fourier-Transformation, vorzugsweise eine FFT und/oder eine DFT, der zuvor gebildeten Differenz der ersten und zweiten zeitlichen und/oder positionsbezogenen Abfolge (20 ,21) und/oder
    • eine Fourier-Transformation, insbesondere eine diskrete Fourier-Transformation, vorzugsweise eine FFT und/oder DFFT, jeweils der Abfolgen und anschließend eine Differenzbildung zwischen den jeweils Fourier-transformierten zeitlichen Abfolgen (20, 21) und/oder
    • Bildung des Mittelwerts der zeitlichen und/oder positionsbezogenen Abfolgen mit anschließender Differenzbildung zwischen den Mittelwerten.

12. Verfahren zur Prüfung nach einem der vorgenannten Ansprüche, **dadurch gekennzeichnet, dass** die Auswertungsabfolge nach einer Abweichung oder wenigstens zwei Abweichungen durchsucht wird (24, 25), die einen vorgegebenen Schwellwert überschreiten und im Fall des Überschreitens des Schwellwertes eine Planlaufänderung und/oder eine Rundlaufänderung und/oder eine Winkeländerung angenommen wird.

13. Verfahren zur Prüfung nach einem der vorgenannten Ansprüche, **dadurch gekennzeichnet, dass** in der Auswertungsfolge, insbesondere in der Fourier-Transformierten bei einem der Umdrehungszahl pro Zeiteinheit der Rotoreinheit entsprechenden Frequenzwert der Differenzwert der Abstände mit einem Schwellwert verglichen wird und im Fall des Überschreitens des Schwellwertes eine Planlaufänderung und/oder eine Rundlaufänderung und/oder eine Winkeländerung angenommen wird.

14. Verfahren zur Prüfung nach einem der vorgenannten Ansprüche, **dadurch gekennzeichnet, dass** aus der Differenz von zwei der zeitlichen und/oder positionsbezogenen Abfolgen (20, 21) eine Verlagerung der Rotoreinheit und/oder der Drehachse bestimmt wird.

15. Verfahren zur Prüfung nach einem der vorgenannten Ansprüche, **dadurch gekennzeichnet, dass** die Bestimmung, ob eine Planlaufänderung, insbesondere ein Planlauffehler und/oder eine Rundlaufänderung, insbesondere ein Rundlauffehler, und/oder eine Winkeländerung, insbesondere ein Winkelfehler, vorliegt/vorliegen, durch Anwendung von künstlicher Intelligenz durchgeführt wird, indem insbesondere durch maschinelles Lernen von den Abfolgen (20, 21) auf den Fehler und/oder die Änderung geschlossen wird.

**Claims**

1. Method for examining the clamping state of a tool holder and/or a tool which is clamped in a tool clamping device (12) of a rotor unit (3) of a motor-driven machine tool unit (1), wherein the tool holder and/or the tool is/are releasably fixed and clamped by means of a tool clamping device (12) which can be acted on with a clamping force, wherein the tool clamping device is displaced in the longitudinal direction of the rotation axis when the tool is clamped, wherein the tool clamping device is arranged in the spindle head of the rotor unit (3), wherein the machine tool unit has a stator unit (2), with respect to which the rotor unit is rotatably supported about a rotation axis, wherein the method comprises the following method steps:

    • providing at least one sensor head (5) for determining a spacing (u),

- arranging the sensor head (5) at a position on the stator unit (2),
- measuring the spacing (u) of the sensor head (5) from a portion of the rotor unit (3),
- recording at least one time- and/or position-related sequence (20, 21) of the spacing values measured with the sensor head (5),
- determining an axial run-out and/or a concentricity deviation and/or an angular change exclusively taking into account the time- and/or position-related sequence of the measured spacing values (u) with respect to the portion of the spindle head which is rotating relative to the sensor head,
- **characterized in that**
- a marking (N) is provided on the rotor unit (3),
- wherein the sensor head (5) detects the marking (N) on the rotor unit during measuring,
- wherein with reference to the marking (N) using the sensor head the current speed ($v_0$, $v_1$) of the rotor unit (3) is detected,
- wherein the recording of a first and a second time- and/or position-related sequence of the spacing values (u) measured with the sensor head is carried out during an acceleration of the rotation of the rotor unit (3) with respect to the stator unit (2), in particular when the rotor unit is started up,
- wherein the respective current speed is associated with the spacing values (u) of the first and second sequence (20, 21) in order to form a sequence vector from the spacing value, the time- and/or position-related information and the current speed ($v_0$),
- wherein the time- and/or position-related information of the sequence vectors of the first and/or second sequence is scaled using the respective associated current speed ($v_0$) so that in particular the sequence vectors of the respective sequences each have at least one spacing value at corresponding positions on the rotor unit (3),
- braking the rotor unit when an axial-run out deviation is identified.

2. Examination method according to Claim 1, **characterized in that** the recording of a first and a second time- and/or position-related sequence (20, 21) of the spacing values (u) measured with the sensor head (5) is carried out during an acceleration of the rotation of the rotor unit (3) outside the marking (N).

3. Examination method according to either of the preceding claims, **characterized in that** the rotor unit (3) is accelerated in a uniform manner during the entire recording.

4. Examination method according to any one of the preceding claims, **characterized in that** the scaling is carried out taking into account the acceleration (a) by the current speeds ($v_0$) being determined at different times and the time between the speed measurements being determined.

5. Examination method according to any one of the preceding claims, **characterized in that** the current speed ($v_0$) of the rotor unit (3) is determined with reference to the marking (N) by:

- a marking (N) which marks a specific angular portion of the rotor unit (3) during the rotation being provided as the marking (N) and the time which the sensor head (5) requires so that the marking (N) at a known angular portion passes the sensor head (5) being determined, and/or
- the time between two sequential detections of the marking (N) being measured by the sensor head (5).

6. Examination method according to any one of the preceding claims, **characterized in that** a groove is used as the marking (N) so that the region outside the groove and inside the groove have different spacing values (u).

7. Examination method according to any one of the preceding claims, **characterized in that** the recording of the first and/or second time- and/or position-related sequence (20, 21) is carried out during a revolution of the rotor unit (3).

8. Examination method according to any one of the preceding claims, **characterized in that** a time- and/or position-related sequence (20, 21) of spacing values (u) which is used as a reference measurement is recorded with an ideally clamped tool and/or tool holder, in particular prior to the first processing operation by the machine tool unit (1) and/or after a cleaning operation, preferably individually for each tool used and/or for each tool holder used.

9. Examination method according to any one of the preceding claims, **characterized in that** a time- and/or position-related sequence (20, 21) of spacing values (u) is recorded with a clamped tool and/or tool holder when the rotor unit (3) is started up in order to reach an operating situation, in particular in a subsequent operating situation, compared with the reference measurement, which is used as a comparison measurement with respect to the reference measurement.

10. Examination method according to any one of the preceding claims, **characterized in that** the marking (N) is used as an initial point and the initial point for the evaluation is associated with the sequences of spacing values in order in particular during the difference formation (22) and/or the Fourier transformation (23) to be able to associate the spacing values of different sequences (20, 21) with each other.

11. Examination method according to any one of the preceding claims, **characterized in that**, using at least one of the following calculations, an evaluation sequence of values is determined:

  • a difference formation (22) between two of the time sequences (20, 21) and subsequently a Fourier transformation (23), in particular a discrete Fourier transformation, preferably an FFT and/or a DFT, of the previously formed difference of the first and second time- and/or position-related sequence (20, 21), and/or
  • a Fourier transformation, in particular a discrete Fourier transformation, preferably an FFT and/or DFFT, of each of the sequences and subsequently a difference formation between the respective time sequences (20, 21) which have undergone Fourier transforms and/or
  • forming the mean value of the time- and/or position-related sequences with subsequent difference formation between the mean values.

12. Examination method according to any one of the preceding claims, **characterized in that** the evaluation sequence is examined for a deviation or at least two deviations (24, 25) which exceed a predetermined threshold value and, in the event of the threshold value being exceeded, an axial run-out change and/or a concentricity change and/or an angular change is/are assumed.

13. Examination method according to any one of the preceding claims, **characterized in that** in the evaluation sequence, in particular in the Fourier transform at a frequency value which corresponds to the number of revolutions per time unit of the rotor unit, the difference value of the spacings is compared with a threshold value and, in the event of the threshold value being exceeded, an axial run-out change and/or a concentricity change and/or an angular change is/are assumed.

14. Examination method according to any one of the preceding claims, **characterized in that** from the difference of two of the time- and/or position-related sequences (20, 21), a displacement of the rotor unit and/or the rotation axis is determined.

15. Examination method according to any one of the preceding claims, **characterized in that** the determination as to whether an axial run-out change, in particular an axial run-out error, and/or a concentricity change, in particular a concentricity error, and/or an angular change, in particular an angular error, is/are present, is carried out using artificial intelligence, in particular by a conclusion being drawn relating to the error and/or the change as a result of machine learning of the sequences (20, 21).

**Revendications**

1. Procédé permettant de vérifier l'état de serrage d'un porte-outil et/ou d'un outil installé sur un dispositif de serrage d'outil (12) d'une unité de rotor (3) d'une unité de machine-outil (1) entraînée par moteur, le porte-outil et/ou l'outil étant fixés de manière amovible et serrés au moyen d'un dispositif de serrage d'outil (12) pouvant être soumis à une force de serrage, le dispositif de serrage d'outil étant serré lorsque l'outil est serré dans la direction longitudinale de l'axe de rotation, le dispositif de serrage d'outil étant disposé dans le nez de broche de l'unité de rotor (3), l'unité de machine-outil présentant une unité de stator (2) par rapport à laquelle l'unité de rotor est montée rotative autour d'un axe de rotation, le procédé comprenant les étapes de procédé suivantes consistant à :

  • fournir au moins une tête de capteur (5) servant à déterminer une distance (u),
  • disposer la tête de capteur (5) dans une position sur l'unité de stator (2),
  • mesurer la distance (u) de la tête de capteur (5) par rapport à une partie de l'unité de rotor (3),
  • enregistrer au moins une séquence de temps et/ou de positionnement (20, 21) des valeurs de distance mesurées par la tête de capteur (5),
  • déterminer un battement axial et/ou un battement radial et/ou une variation angulaire exclusivement en tenant compte de la séquence de temps et/ou de positionnement des valeurs de distance mesurées (u) par rapport à la partie du nez de broche tournant par rapport à la tête de capteur,

**caractérisé en ce que**

  • un repère (N) est fourni sur l'unité de rotor (3),
  • la tête de capteur (5) détectant le repère (N) sur l'unité de rotor lors de la mesure,
  • la vitesse actuelle ($v_0$, $v_1$) de l'unité de rotor (3) étant détectée à l'aide de la détection du repère (N) par la tête de capteur,
  • l'enregistrement d'une première et d'une deuxième séquence de temps et/ou de positionnement des valeurs de distance (u) mesurées par la tête de capteur étant effectué pendant une accélération de la rotation de l'unité de rotor (3) par rapport à l'unité de stator (2), en particulier au démarrage de l'unité de rotor,
  • la vitesse actuelle respective étant associée aux valeurs de distance (u) de la première et de la deuxième séquence (20, 21) afin de former un vecteur de séquence à partir de la valeur de distance, de l'information de temps et/ou de positionnement, ainsi que de la vitesse actuelle ($v_0$),

• l'information de temps et/ou de positionnement des vecteurs de séquence de la première et/ou de la deuxième séquence étant mise à l'échelle à l'aide de la vitesse actuelle ($v_0$) respectivement associée de sorte qu'en particulier les vecteurs de séquence des séquences respectives présentent respectivement au moins une valeur de distance pour des positions concordantes sur l'unité de rotor (3),

• freiner l'unité de rotor en cas d'identification d'un battement axial.

2. Procédé de vérification selon la revendication 1, **caractérisé en ce que** l'enregistrement d'une première et d'une deuxième séquence de temps et/ou de positionnement (20, 21) des valeurs de distance (u) mesurées par la tête de capteur (5) est effectué pendant une accélération de la rotation de l'unité de rotor (3) en dehors du repère (N).

3. Procédé de vérification selon l'une quelconque des revendications précédentes, **caractérisé en ce que** l'unité de rotor (3) est accélérée de façon homogène pendant l'ensemble de l'enregistrement.

4. Procédé de vérification selon l'une quelconque des revendications précédentes, **caractérisé en ce que** la mise à l'échelle est effectuée en tenant compte de l'accélération (a) **en ce que** les vitesses actuelles ($v_0$) sont déterminées à différents instants et le délai entre les mesures de vitesse est déterminé.

5. Procédé de vérification selon l'une quelconque des revendications précédentes, **caractérisé en ce que** la vitesse actuelle ($v_0$) de l'unité de rotor (3) est déterminée à l'aide du repère (N) **en ce que** :

   • comme repère (N), un repère est fourni qui marque un certain secteur angulaire de l'unité de rotor (3) lors de la rotation, et le temps que nécessite la tête de capteur (5) pour que le repère (N) passe devant la tête de capteur (5) lorsque le secteur angulaire est connu est déterminé, et/ou
   • le délai entre deux détections successives du repère (N) par la tête de capteur (5) est mesuré.

6. Procédé de vérification selon l'une quelconque des revendications précédentes, **caractérisé en ce que** comme repère (N), une rainure est utilisée de sorte que la zone à l'extérieur de la rainure et la zone à l'intérieur de la rainure présentent différentes valeurs de distance (u).

7. Procédé de vérification selon l'une quelconque des revendications précédentes, **caractérisé en ce que** l'enregistrement de la première et/ou de la deuxième séquence de temps et/ou de positionnement (20, 21) est effectué pendant un tour de l'unité de rotor (3).

8. Procédé de vérification selon l'une quelconque des revendications précédentes, **caractérisé en ce qu'**une séquence de temps et/ou de positionnement (20, 21) de valeurs de distance (u), qui est utilisée comme mesure de référence, quand un outil et/ou porte-outil est/sont parfaitement serré(s), est enregistrée en particulier avant la première opération d'usinage par l'unité de machine-outil (1) et/ou après une opération de nettoyage, de préférence individuellement pour chaque outil utilisé et/ou pour chaque porte-outil utilisé.

9. Procédé de vérification selon l'une quelconque des revendications précédentes, **caractérisé en ce qu'**une séquence de temps et/ou de positionnement (20, 21) de valeurs de distance (u) pour un outil et/ou porte-outil serré(s) est enregistrée lors du démarrage de l'unité de rotor (3) pour atteindre une situation opérationnelle, en particulier une situation opérationnelle ultérieure en comparaison avec la mesure de référence, qui est utilisée comme mesure de comparaison pour la mesure de référence.

10. Procédé de vérification selon l'une quelconque des revendications précédentes, **caractérisé en ce que** le repère (N) est utilisé comme point initial et le point initial est associé aux séquences de valeurs de distance pour l'évaluation afin de pouvoir associer les valeurs de distance de différentes séquences (20, 21) les unes aux autres, en particulier lors de la soustraction (22) et/ou de la transformation de Fourier (23).

11. Procédé de vérification selon l'une quelconque des revendications précédentes, **caractérisé en ce qu'**une séquence d'évaluation de valeurs est déterminée au moyen d'au moins l'un des calculs suivants :

   • une soustraction (22) entre deux séquences de temps (20, 21) et ensuite une transformation de Fourier (23), en particulier une transformation de Fourier discrète, de préférence une FFT et/ou DFT, de la soustraction effectuée auparavant de la première et de la deuxième séquence de temps et/ou de positionnement (20, 21), et/ou
   • une transformation de Fourier, en particulier une transformation de Fourier discrète, de préférence une FFT et/ou une DFT, respectivement des séquences et ensuite une soustraction entre les séquences de temps (20, 21) respectivement soumises à une transformation de Fourier, et/ou
• un calcul de la moyenne des séquences de temps et/ou de positionnement avec une soustraction consécutive entre les moyennes.

12. Procédé de vérification selon l'une quelconque des revendications précédentes, **caractérisé en ce que** la séquence d'évaluation est examinée quant à un écart ou à au moins deux écarts (24, 25) qui dépassent une valeur seuil prédéfinie, et en cas de dépassement de la valeur seuil, un battement axial et/ou un battement radial et/ou une variation angulaire sont supposés.

13. Procédé de vérification selon l'une quelconque des revendications précédentes, **caractérisé en ce que** dans la séquence d'évaluation, en particulier dans la transformée de Fourier, pour valeur de fréquence correspondant à la vitesse de rotation par unité de temps de l'unité de rotor, la valeur de différence des distances est comparée avec une valeur seuil, et en cas de dépassement de la valeur seuil, un battement axial et/ou un battement radial et/ou une variation angulaire sont supposés.

14. Procédé de vérification selon l'une quelconque des revendications précédentes, **caractérisé en ce qu'**à partir de la différence de deux des séquences de temps et/ou de positionnement (20, 21), un décalage de l'unité de rotor et/ou de l'axe de rotation est/sont déterminé(s).

15. Procédé de vérification selon l'une quelconque des revendications précédentes, **caractérisé en ce que** la détermination si un battement axial, en particulier une erreur de battement axial, et/ou un battement radial, en particulier une erreur de battement radial, et/ou une variation angulaire, en particulier une erreur de variation angulaire, sont présents, est effectuée par l'application d'une intelligence artificielle **en ce qu'**en particulier un apprentissage machine des séquences (20, 21) permet de conclure à l'erreur et/ou à la variation.

Fig. 1

Fig. 2

Kein Span

0,6
0,4
0,2
-0,2
-0,4
-0,6
-0,8

A

Plananlagefläche 1

0,6
0,4
0,2
-0,2
-0,4
-0,6
-0,8
-1

B

Plananlagefläche 2

0,8
0,6
0,4
0,2
-0,2
-0,4
-0,6
-0,8

Δφ

C

Fig. 3

EP 3 889 706 B1

Fig. 4

Fig. 5

17

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3581328 A1
- EP 2312270 A1

- DE 102006016919 A1